# EUROPÄISCHE PATENTSCHRIFT

(11) **EP 3 655 672 B1**
(45) Veröffentlichungstag und Bekanntmachung des Hinweises auf die Patenterteilung: **30.03.2022**
(21) Anmeldenummer: 18762801.1
(22) Anmeldetag: 23.08.2018
(51) Int. Cl.: F16C 19/06, F16C 33/37, F16C 33/38, F16C 33/58, F16C 19/16

(54) **WÄLZLAGER**
ROLLING BEARING
ROULEMENT

(30) Priorität: 08.09.2017 DE 202017105464 U; 30.11.2017 DE 202017107296 U
(43) Veröffentlichungstag der Anmeldung: 27.05.2020
(73) Patentinhaber: Liebherr-Components Biberach GmbH, 88400 Biberach/Riß (DE)
(72) Erfinder: KREINER, Stephan, 89077 Ulm (DE); DAHL CHRISTENSEN, Martin, 5430 Wettingen (CH)
(74) Vertreter: Thoma, Michael
(86) Internationale Anmeldenummer: PCT/EP2018/072822
(87) Internationale Veröffentlichungsnummer: WO 2019/048251

(56) Entgegenhaltungen:
- EP-A1- 0 985 851
- EP-A2- 0 961 045
- DE-A1-102008 038 534
- DE-A1-102015 214 105
- US-A- 3 292 981
- US-A1- 2016 341 243

## Beschreibung

Die vorliegende Erfindung betrifft ein Wälzlager, insbesondere in Form eines mittenfreien Großwälzlagers, mit einer Vielzahl von Wälzkörpern, die zwischen zumindest zwei Laufbahnen aufgenommen sind, auf denen die Wälzkörper abwälzen, wobei zwischen den Wälzkörpern Distanzhalter vorgesehen sind, die die Wälzkörper voneinander beabstandet halten.

Um die Wälzkörper eines Wälzlagers voneinander beabstandet zu halten und in Laufrichtung gleichmäßig verteilt anzuordnen, werden als Distanzhalter regelmäßig Wälzkörperkäfige eingesetzt, die üblicherweise ein plattenförmiges Element bilden, in dem in der gewünschten Beabstandung Ausnehmungen für jeweils einen Wälzkörper vorgesehen sind. Bei einem Drehlager bildet der Wälzkörperkäfig einen Ring, in dem unter gleichmäßiger Teilung Ausnehmungen für die Wälzkörper vorgesehen sind, so dass jeder Wälzkörper von dem Wälzkörperkäfig umgriffen und benachbarte Wälzkörper durch einen entsprechenden Steg voneinander beabstandet sind. Hierdurch können auftretende Reibungsverluste sehr gering gehalten werden und Beschädigungen vermieden werden.

Nachteilig an solchen Wälzkörperkäfigen ist jedoch der Umstand, dass die Laufbahnen im Querschnitt betrachtet an ihren Rändern verkürzt werden, da die Wälzkörperkäfige an der Schnittstelle zwischen den beiden Laufbahnen Platz benötigen, so dass der benötigte Spalt zwischen zwei benachbarten Laufbahnen eine gewisse Dicke benötigt, um die seitlichen Ränder des Wälzkörperkäfigs aufnehmen zu können. Der Wälzkörperkäfig läuft üblicherweise in einer Ebene senkrecht zur Hauptabstützrichtung des Wälzlagers, also bei einem Axiallager in einer Ebene senkrecht zur Drehrichtung und bei einem Radiallager entlang einer Zylinderfläche zwischen Außen- und Innenring.

Besonders bei Großwälzlagern, aber auch bei anderen hochbelasteten Wälzlagern kann eine Verkürzung der Querschnittserstreckung der Laufbahnen an deren Rändern zu einem sog. Kantentragen führen, d.h. unmittelbar an den verkürzten Kanten treten sehr hohe punktuelle Belastungen zwischen Wälzkörper und Laufbahn auf. Beispielsweise bei Kugellagern schmiegen sich die Laufbahnen hochbelasteter Lager im Querschnitt betrachtet an sich relativ weit an die jeweilige Halbkugelform an. Werden die Ränder dieser Laufbahnen aus besagtem Grund zur Anordnung der Wälzkörperkäfige verkürzt, nimmt die Tragfähigkeit ab und es kann zu besagtem Kantentragen kommen, was zu erhöhtem Verschleiß oder gar Beschädigungen führen kann. Dies gilt analog für Vierpunktlager, bei denen die Wälzkörper in Viertelschalen laufen, d.h. die Laufbahnen Viertelschalen bilden. Insbesondere bei Großwälzlagern kann es auch zu einer Verformung der an das Lager angeschlossenen Strukturen kommen.

Um das besagte Problem der randseitigen Verkürzung der Laufbahnen zu vermeiden, wurde bereits vorgeschlagen, anstelle eines ringförmigen Wälzkörperkäfigs separate, näherungsweise etwa hülsenförmige Distanzhalter zwischen jeweils benachbarte Wälzkörper einzusetzen. Mangels Umgreifen der Wälzkörper benötigen solche separaten Distanzhalter keinen Platz in der Trennfuge zwischen den Laufbahnen an deren Rändern, so dass ein randseitiges Verkürzen der Laufbahnen vermieden werden kann. Solche hülsenförmigen Distanzhalter können an gegenüberliegenden Stirnseiten jeweils eine näherungsweise kugelkalottenförmige Ausnehmung besitzen, mit der sich der Distanzhalter an die kugelförmigen Wälzkörper schmiegen kann.

Bei solchen separaten, miteinander nur durch die Kugeln bzw. Wälzkörper verbundenen Distanzhaltern kommt es jedoch regelmäßig zu höheren Reibungsverlusten im Wälzlager. Zudem kann es zu einer Art Ziehharmonikaeffekt kommen, der die gewünschte gleichmäßige Verteilung der Wälzkörper in Laufrichtung beeinträchtigt. Wird ein Wälzkörper durch Verschmutzung oder Ähnliches infolge eines erhöhten Wälzwiderstandes abgebremst, laufen die nachlaufenden Wälzkörper auf, so dass es bereichsweise zu einem Stauchen der Verteilung und an einem anderen Bereich zu einem Auseinanderziehen der Wälzkörper kommen kann, wodurch die Querführung der Wälzkörper durch die Distanzhalter beeinträchtigt wird. Ein solcher Effekt kann insbesondere auch in einem unbelasteten Sektor des Wälzlagers eintreten, in dem die Querführungswirkung der Distanzhülsen alleine nicht ausreicht, um die Wälzkörper exakt zu führen.

Ein Linearwälzlager mit separaten Distanzhaltern zwischen den Wälzkörpern zeigt beispielsweise die Schrift EP 2 518 351 A1, wobei hier jeder zweite Wälzkörper von einem ringförmigen Distanzhalter umschlossen ist, der den umschlossenen Wälzkörper sowohl gegenüber dem vorauslaufenden als auch gegenüber dem nachlaufenden Wälzkörper auf Distanz hält.

Ein Großwälzlager mit Distanzhaltern in Form eines ringförmigen Käfigs zeigt beispielsweise die Schrift DE 20 2011 051 680 U1.

Die Schrift DE 10 2008 038 534 A1 zeigt einen kammförmigen Distanzhalter, der eine Reihe von halbmondförmigen Aussparungen umfasst, in denen die Wälzkörper aufgenommen sind, und mit seinem Rücken in einer Nut in der Mitte einer Laufbahn läuft, sodass die Trennfuge zwischen den Laufbahnen ausgespart bleibt. Um montiert werden zu können, ist der Distanzhalterkamm federelastisch ausgebildet und im Bereich der Kammzähne mit Federaussparungen versehen, sodass der Distanzhalterkamm insgesamt auf- bzw. zusammengebogen werden kann, um montiert werden zu können und die Wälzkörper ohne Klemmen halten zu können.

Die Schrift EP 0 985 851 A1 zeigt eine Kugelspindel, deren Kugeln durch ein Distanzhalterband auf Abstand gehalten sind, wobei das genannte Distanzhalterband elastisch ausgebildet ist, um dem endlosen Umlaufweg der Kugeln auch im Bereich der Rückführabschnitte folgen zu können.

Die US 3,292,981 A1 zeigt ein Wälzlager mit separaten Distanzhaltern zwischen den Wälzkörpern, die vorspringende Stützarme besitzen, die im Bereich der Trennfuge zwischen den Laufbahnen aneinander stoßen.

Ferner zeigt die Schrift DE 10 2015 214 105 A1 ein Wälzlager, dessen Zylinderrollen von einem insgesamt U-förmigen Distanzhalterband auf Abstand gehalten sind, wobei das genannte Distanzhalterband seitlich rechts und links vorstehende Führungsstege besitzt, die in Laufbahnnuten laufen.

Der vorliegenden Erfindung liegt die Aufgabe zugrunde, ein verbessertes Wälzlager der genannten Art zu schaffen, das Nachteile des Standes der Technik vermeidet und Letzteren in vorteilhafter Weise weiterbildet. Insbesondere soll eine möglichst exakte Führung der Wälzkörper auch in unbelasteten Sektoren des Wälzlagers erreicht werden, ohne hierfür hohe Reibungsverluste oder die Gefahr des vorgenannten Kantentragens in Kauf nehmen zu müssen.

Erfindungsgemäß wird die genannte Aufgabe durch ein Wälzlager gemäß Anspruch 1 gelöst. Bevorzugte Ausgestaltungen der Erfindung sind Gegenstand der abhängigen Ansprüche.

Es wird also vorgeschlagen, zwischen jeweils benachbarten Distanzhaltern, die jeweils zwischen einem Paar Wälzkörper angeordnet sind, eine gegenseitige Führung vorzusehen, die Kräfte zwischen den Distanzhaltern übertragen kann und die Distanzhalter in Laufrichtung der Wälzkörper gegeneinander abstützt, so dass die Distanzhalter relativ zueinander nicht mehr nur durch Wälzkörper, sondern auch direkt zueinander positioniert sind und die Wälzkörper in der gewünschten Verteilung in Laufrichtung halten. Die gegenseitige Abstützung der Distanzhalter erfolgt jedoch nicht in der Trennfuge zwischen den Laufbahnen, sondern in einem Mittelabschnitt einer jeweiligen Laufbahn, so dass eine randseitige Verkürzung der Laufbahnen vermieden werden kann. Erfindungsgemäß besitzt zumindest eine der Laufbahnen in einem Mittenabschnitt eine etwa nutförmige Längsausnehmung, in der zwischen den Distanzhaltern vorgesehene Stützarme laufen, die jeweils den Wälzkörper zwischen zwei benachbarten Distanzhaltern umgreifen und die benachbarten Distanzhalter gegeneinander in Laufrichtung der Wälzkörper abstützen. Im Vergleich zu herkömmlichen Wälzkörperkäfigen, die die Wälzkörper in der Trennfuge zwischen den Laufbahnen umgreifen, ist die Abstützung zwischen den Distanzhaltern sozusagen um näherungsweise 90° verkippt und in eine Längsausnehmung im Mittenabschnitt einer Laufbahn verlegt.

Vorteilhafterweise weist jede der Laufbahnen, auf denen der Wälzkörpersatz abwälzt, eine solche etwa mittig angeordnete Längsausnehmung auf, so dass die Wälzkörper auf gegenüberliegenden Seiten durch Stützarme umgriffen werden können, über die die zwischen den Wälzkörpern liegenden Distanzhalter gegeneinander abgestützt sind. Hierdurch kann eine gleichmäßige, präzise Führung der Wälzkörper auch mit schlank dimensionierten Stützarmen und damit schmalen Längsausnehmungen erreicht werden.

Die Distanzhalter bzw. deren Stützarme sind grundsätzlich unverbunden bzw. separat ausgebildet, so dass die Kräfte zwischen benachbarten Distanzhaltern im Wesentlichen nur durch Aneinanderstoßen der besagten Stützarme erfolgt. Hierdurch können die Distanzhalter in einfacher Weise montiert und in den Zwischenraum zwischen den Laufbahnen eingesetzt werden, wobei dies vorteilhafterweise über ein Montageloch erfolgen kann, das in einem oder beiden der Laufbahnkörper ausgebildet sein kann. Beispielsweise kann eine solche Montageaussparung, die ausreichend groß bemessen ist, um einen Distanzhalter einschieben zu können, seitlich an einem oder beiden Laufbahnkörpern vorgesehen sein, insbesondere im Bereich der Trennfuge zwischen den Laufbahnen.

Je nach Ausbildung der Distanzhalter können auch Kombinationen , nicht Teil der Erfindung, hiervon vorgesehen sein. Insbesondere können separate Distanzhalter, die jeweils zwischen zwei benachbarten Wälzkörpern angeordnet sind, mit kettenförmig miteinander verbundenen Distanzhaltern kombiniert sein, insbesondere wenn die Distanzhalter, die zwischen einem jeweiligen Paar von Wälzkörpern vorgesehen sind, geteilt ausgebildet sind. Beispielsweise kann ein die Wälzkörper auf einer Seite umgreifender, halbschalenförmig ausgebildeter bzw. halber Wälzkörperkäfig mit Distanzhaltern kombiniert werden, die die Wälzkörper auf einer dem Käfig gegenüberliegenden Seite auf Abstand halten. Bei dieser Konfiguration läuft der genannte halbe Wälzkörperkäfig vorteilhafterweise ebenfalls in einer im Mittenbereich einer Laufbahn vorgesehenen, nutförmigen Längsausnehmung, wobei ein solcher Halbkäfig Distanzkörper zwischen den Wälzkörpern sowie Stützarme aufweisen kann, die benachbarte Distanzkörper miteinander verbinden, einen jeweiligen Wälzkörper umgreifen und in der genannten Längsausnehmung laufen.

Wird ein solcher halber Käfig verwendet, können auf der dem halben Käfig gegenüberliegenden Seite Distanzkörper zwischen benachbarte Wälzkörper eingesetzt sein, um sozusagen die fehlende Hälfte des Käfigs zu ergänzen und die Wälzkörper auch auf dieser Hälfte der Zwischenräume zwischen den Wälzkörpern abzustützen. Die genannten Distanzkörper können dabei mit dem halben Käfig verbunden, insbesondere daran abgestützt sein.

Unabhängig von der zuvor erläuterten Kombination von Distanzkörpern mit einem halben Käfig, können die Distanzhalter auch selbst geteilt ausgebildet sein, so dass ein jeweiliger Distanzhalter zwischen einem Paar benachbarter Wälzkörper aus zwei oder ggf. auch mehreren Distanzhalterteilen zusammengesetzt sein kann. Insbesondere können zwei sich ergänzende Distanzhalterhälften, vorzugsweise in Form von Halbschalen, vorgesehen sein, die sich zwischen einem Paar benachbarter Wälzkörper zu einem vollen Distanzhalter ergänzen.

Hierbei weist erfindungsgemäß jeder Distanzhalter einen Stützarm auf, der in einer Längsausnehmung in der Laufbahn aufgenommen ist, der die jeweilige Distanzhalterhälfte zugewandt ist.

Unabhängig davon, ob die Distanzhalter zwischen zwei benachbarten Wälzkörpern geteilt oder ungeteilt ausgebildet sind, können die vorgenannten Stützarme integral einstückig an dem jeweiligen Distanzhalter angeformt und/oder starr daran befestigt sein.

Erfindungsgemäß besitzt ein Stützarm dabei gegenüberliegende Endabschnitte, die zueinander komplementär und passgenau aneinandersetzbar konturiert sind. Beispielsweise kann ein vorauslaufendes Ende eines Stützarms leicht ballig bzw. konvex konturiert sein, während ein nachlaufendes Ende des Stützarms leicht muldenförmig bzw. konkav konturiert sein kann.

Der Stützarm eines jeweiligen Distanzhalters kann dabei symmetrisch angeordnet sein und in Laufrichtung sowie entgegen der Laufrichtung jeweils gleich weit vorspringen, insbesondere etwa bis zur Rotationsachse des jeweils vorauslaufenden bzw. nachlaufenden Wälzkörpers. Ein solcher symmetrischer Stützarm umgreift dabei hälftig den vorauslaufenden Wälzkörper und hälftig den nachlaufenden Wälzkörper.

Alternativ zu einer solchen symmetrischen Stützarmausbildung können die Stützarme jedoch auch gegenüber der Mittelebene des Distanzhalters versetzt ausgebildet bzw. angeordnet sein. Beispielsweise kann der Stützarm gegenüber dem hülsenförmigen Distanzkorpus in Laufrichtung weiter vorspringen als entgegen der Laufrichtung (oder auch umgekehrt). Insbesondere kann der Stützarm an einem stirnseitigen Ende des Distanzkorpus etwa bündig mit dem Distanzkorpus abschließen, während das gegenüberliegende Ende so weit vorspringt, dass es die Stirnseite des nächsten Distanzkorpus, genauer gesagt das Ende des dortigen Stützarms erreicht, der mit der Stirnseite des nächsten Distanzkorpus bündig abschließt.

Werden geteilt ausgebildete Distanzhalter verwendet, kann die Teilungsebene grundsätzlich verschieden gewählt sein. Beispielsweise kann ein Distanzhalter zwei Distanzhalterhälften aufweisen, die in einer Ebene parallel zur Trennfuge zwischen den beiden Laufbahnen und/oder senkrecht zur Hauptstützrichtung der Wälzkörper ausgerichtet sind. Bei einem Axiallager können die Distanzhalter beispielsweise in einer Ebene senkrecht zur Drehachse des Lagers geteilt sein.

Solchermaßen geteilte Distanzhalter können dabei jeweils zwei zu gegenüberliegenden Seiten hin offene Aufnahmeausnehmungen beispielsweise in Form einer Kugelkalotte entsprechend einer Viertelkugel aufweisen, die jeweils zwei nacheinander laufende Wälzkörper aufnehmen zu können.

Alternativ zu einer solchen Distanzhalterteilung parallel zur Trennfuge zwischen den Laufbahnen kann ein Distanzhalter aber auch in einer Ebene senkrecht zur Laufrichtung der Wälzkörper geteilt sein. In diesem Fall kann jede Distanzhalterhälfte eine Aufnahmeausnehmung aufweisen, die einen jeweiligen Wälzkörper aufnimmt. Die solchermaßen geteilten Distanzhalterhälften liegen dabei sozusagen Rücken an Rücken.

Die Erfindung wird nachfolgend anhand bevorzugter Ausführungsbeispiele und zugehöriger Zeichnungen näher erläutert. In den Zeichnungen zeigen:

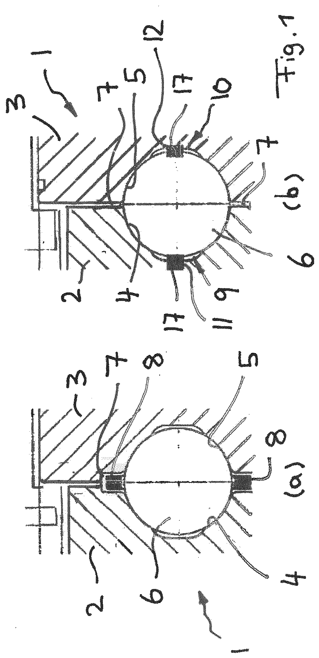

- Fig. 1:: eine schematische Schnittansicht durch ein Wälzlager mit kugelförmigen Wälzkörpern, wobei die Teilansicht (a) die Anordnung eines herkömmlichen Wälzkörperkäfigs zeigt, dessen seitliche Ränder in der Trennfuge zwischen den Laufbahnen aufgenommen sind und dort die Laufbahnen verkürzen, während die Teilansicht (b) die nutförmigen Längsausnehmungen in Mittenabschnitten der Laufbahnen und die darin laufenden Stützarme der Distanzhalter nach einer Ausführung der Erfindung zeigen,

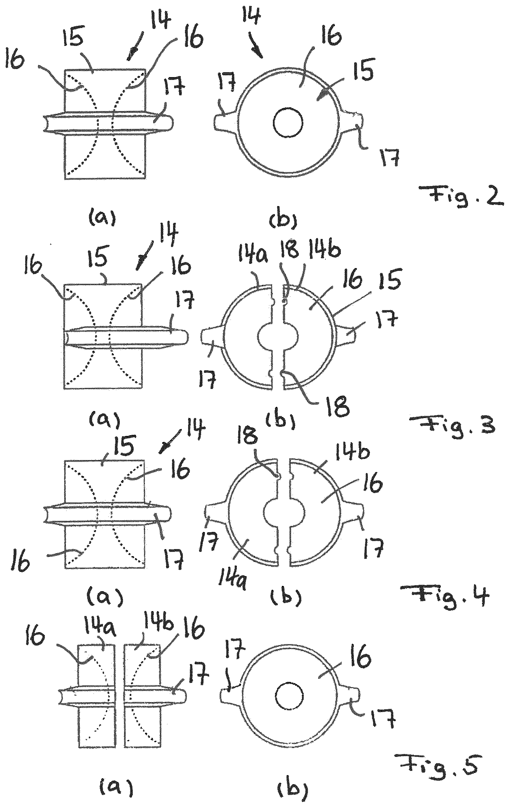

- Fig. 2:: eine schematische Darstellung eines Distanzhalters, der nach einer vorteilhaften Ausführung der Erfindung einstückig ausgebildet ist und symmetrisch ausgebildete bzw. zentrisch angeordnete Stützarme aufweist, wobei die Teilansicht (a) eine Draufsicht und die Teilansicht (b) eine Stirnansicht in einer Blickrichtung parallel zur Laufrichtung zeigt,
- Fig. 3:: eine schematische Darstellung eines Distanzhalters, der nach einer vorteilhaften Ausführung der Erfindung zweistückig ausgebildet ist und exzentrisch bzw. versetzt ausgebildete Stützarme aufweist, wobei die Teilansicht (a) eine Draufsicht und die Teilansicht (b) eine Stirnansicht in einer Blickrichtung parallel zur Laufrichtung zeigt,
- Fig. 4:: eine schematische Darstellung eines Distanzhalters, der nach einer vorteilhaften Ausführung der Erfindung zweistückig ausgebildet ist und symmetrisch ausgebildete Stützarme aufweist, wobei die Teilansicht (a) eine Draufsicht und die Teilansicht (b) eine Stirnansicht in einer Blickrichtung parallel zur Laufrichtung zeigt,
- Fig. 5:: eine schematische Darstellung eines Distanzhalters, der nach einer vorteilhaften Ausführung der Erfindung zweistückig ausgebildet ist und symmetrisch ausgebildete Stützarme aufweist, wobei die Teilansicht (a) eine Draufsicht und die Teilansicht (b) eine Stirnansicht in einer Blickrichtung parallel zur Laufrichtung zeigt, wobei der Distanzhalter in einer Ebene senkrecht zur Laufrichtung geteilt ist,

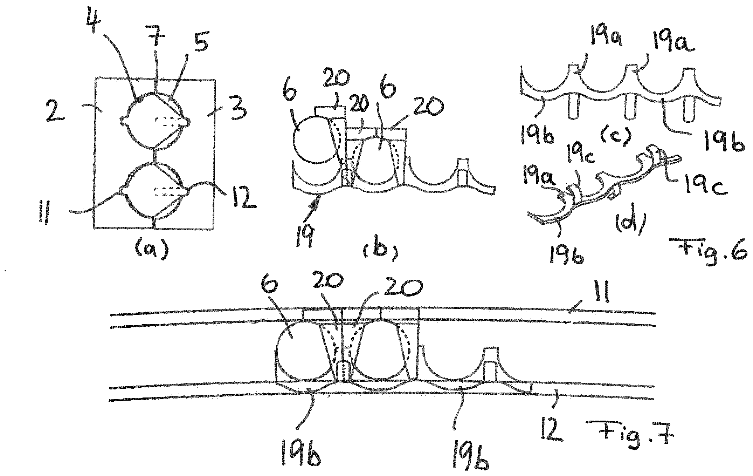

- Fig. 6:: eine weitere Ausführung eines Distanzhalters, der eine Kombination aus einem halbschalenförmig ausgebildeten Käfig und separaten Distanzhalterstücken darstellt, wobei die Teilansicht (a) eine Frontansicht in Laufrichtung und im eingebauten Zustand zeigt, die Teilansicht (b) eine Seitenansicht des zusammengesetzten, kombinierten Distanzhalters teilweise in einer Explosionsdarstellung und teilweise in einer Montagedarstellung zeigt, die Teilansicht (c) eine Seitenansicht des Halbkäfigs und die Teilansicht (d) eine perspektivische Darstellung des Halbkäfigs zeigt, und
- Fig. 7:: eine schematische Schnittansicht in einer Ebene durch die beiden nutförmigen Längsausnehmungen in den Mittenabschnitten der Laufbahnen, die die Anordnung der Stützarme und deren Führung in den genannten Längsausnehmungen zeigt.

Wie Fig. 1 zeigt, kann das Wälzlager 1 als Drehlager ausgebildet sein und zwei Lagerringe 2, 3 beispielsweise in Form eines Innen- und eines Außenrings aufweisen, wobei das Lager als Axiallager oder als Radiallager oder auch als Mischform, die sowohl Axialkräfte als auch Radialkräfte abstützt, ausgebildet sein.

Bei Ausbildung als Linearlager können anstelle der beiden Lagerringe 2, 3 entsprechende Lagerbahnkörper vorgesehen sein, die sich linear erstrecken und beispielsweise schienenartig ausgebildet sein können.

In Fig. 1 ist lediglich eine Wälzkörperreihe gezeigt, wobei das Lager natürlich auch mehrreihig ausgebildet sein kann und eine oder mehrere Axiallagerreihen und eine oder mehrere Radiallagerreihen umfassen kann.

Die zueinander verdrehbaren Lagerringe 2, 3 weisen dabei jeweils eine Laufbahn 4 bzw. 5 auf, die einander zugewandt sind und durch eine Reihe von Wälzkörpern 6 gegeneinander abgestützt sind, die auf den genannten Laufbahnen 4 und 5 abwälzen.

Wie Fig. 1 zeigt, können die Wälzkörper 6 kugelförmig ausgebildet sein. Dementsprechend können die Laufbahnen 4 und 5 jeweils halbschalenförmig gekrümmt ausgebildet sein, um sich an die kugelförmigen Wälzkörper 6 anzuschmiegen. Alternativ können auch vier viertelschalenförmige Laufbahnen vorgesehen sein, in denen die Wälzkörper 6 laufen, wenn das Lager 1 als Vierpunktlager ausgebildet ist. Es versteht sich jedoch, dass auch andere Wälzkörper, beispielsweise zylindrische oder tonnenförmige Wälzkörper und die Laufbahnen 4 und 5 dann in entsprechend anderer Weise an die Wälzkörper 6 angepasst sein können.

Die Teilansicht (a) der Fig. 1 zeigt dabei die Anordnung eines herkömmlichen Wälzkörperkäfigs, der die Wälzkörper 6 mit seitlichen Randstegen in der Trennfuge 7 zwischen den beiden Laufbahnen 4 und 5 umgreift. Um die seitlichen Randstege 8 des Wälzkörperkäfigs, der die Distanzhalter zwischen den Wälzkörpern 6 bildet, aufnehmen zu können, muss die besagte Trennfuge 7 zwischen den beiden Lagerringen 2 und 3 an den Rändern der Laufbahnen 4 und 5 eine gewisse Dicke besitzen, was dazu führt, dass die Laufbahnen 4 und 5 im Querschnitt betrachtet - wie dies Fig. 1 (a) zeigt - an ihren Rändern verkürzt werden, was zu dem eingangs erläuterten Problem des Kantentragens führen kann.

Wie Fig. 1 (b) zeigt, ist es nach einer Ausführung der Erfindung vorteilhaft, wenn die Wälzkörper 6 nicht mehr im Bereich der genannten Trennfuge 7 seitlich umgriffen werden, sondern in Mittenabschnitten 9 und 10 der Laufbahnen 4 und 5 und die Distanzhalter den genannten Bereich der Trennfuge 7 aussparen, d.h. dort keinen Platz beanspruchen, so dass die Trennfuge 7 deutlich kleiner ausgebildet werden kann. Hierdurch wird die genannte randseitige Verkürzung der Laufbahnen 4 und 5 vermieden und dementsprechend das genannte Problem des Kantentragens entschärft.

Um die Wälzkörper 6 in den besagten Mittenabschnitten 9 und 10 der Laufbahnen 4 und 5 umgreifen zu können, ist in den genannten Laufbahnen 4 und 5 etwa mittig jeweils eine nutartige Längsausnehmung 11 und 12 vorgesehen, in denen die Stützarme 13 der Distanzhalter 14 laufen können, durch die benachbarte Distanzhalter 14 gegeneinander in Laufrichtung der Wälzkörper 6 abgestützt sind.

Vergleicht man die Teilansichten (a) und (b) der Fig. 1, ist ersichtlich, dass sozusagen die Stützebene eines herkömmlichen Wälzkörperkäfigs, in der die in Laufrichtung wirksamen Stützabschnitte des Käfigs laufen, sozusagen um etwa 90° verkippt wurde.

Die genannten Distanzhalter 14 können dabei separat voneinander ausgebildet sein, so dass zwischen jedem Paar benachbarter Wälzkörper 6 ein separater Distanzhalter 14 vorgesehen ist. Gleichwohl wäre es auch möglich, eine miteinander verbundene Distanzhalterkette nach Art eines Käfigs vorzusehen, dessen randseitigen Stützarmabschnitte in den besagten Längsausnehmungen 11 und 12 in den Mittenabschnitten 9 und 10 der Laufbahnen 4 und 5 laufen.

Wie Fig. 2 zeigt, kann ein jeweiliger Distanzhalter 14 einstückig ausgebildet sein und einen etwa hülsen- bzw. zylinderförmigen Distanzkorpus 15 umfassen, an dessen Stirnseiten jeweils an den Wälzkörper 6 angepasste Aufnahmeausnehmungen 16 ausgebildet sind. Ist der Wälzkörper 6 kugelförmig, kann die besagte Aufnahmeausnehmung 16 zumindest näherungsweise kugelkalottenförmig konturiert sein.

An den Umfangsseiten umfasst der Distanzhalter 14 sich in Laufrichtung der Wälzkörper 6 erstreckende Stützarme 17, wobei vorteilhafterweise auf gegenüberliegenden Umfangsseiten des Distanzhalters 14 jeweils ein solcher Stützarm 17 und somit insgesamt also zwei Stützarme 17 vorgesehen sein können.

Die genannten Stützarme 17 können sich dabei nach Art von Längsstegen oder -leisten nach Art von Vorsprüngen an der Umfangsseite erstrecken, so dass die Stützarme 17 in den zuvor genannten Längsausnehmungen 11 und 12 in Mittenabschnitten 9 und 10 der Laufbahnen 4 und 5 laufen können und darin geführt sind.

Wie Fig. 2 zeigt, können die Stützarme 17 symmetrisch ausgebildet sein und stirnseitig über den Hülsenkorpus 15 der Distanzhalter 14 vorspringen, vorteilhafterweise jeweils so weit, dass die Enden der Stützarme 17 im Bereich der Drehachsen der jeweiligen Wälzkörper 6 zu liegen kommen. Die Länge der Stützarme 17 kann im Wesentlichen der gewünschten Teilung bzw. Beabstandung zweier benachbarter Wälzkörper entsprechen, wenn die besagte Beabstandung von Mittelpunkt zu Mittelpunkt der Wälzkörper gemessen wird.

Wie Fig. 2 zeigt, können die Endabschnitte der Stützarme 17 zueinander komplementär ausgebildet sein, beispielsweise leicht konkav am vorauslaufenden Ende und leicht ballig am nachlaufenden Ende, so dass das vorauslaufende Ende eines Stützarms 17 eines ersten Distanzhalters mit dem nachlaufenden Ende des Stützarms eines vorauslaufenden Distanzhalters passgenau in Eingriff kommt.

Wie Fig. 3 zeigt, können die Stützarme 17 aber auch unsymmetrisch bzw. versetzt gegenüber einer Mittelebene des zylindrischen Distanzkorpus 15 ausgebildet sein.

Beispielsweise kann ein Stützarm 17 mit einem Endabschnitt etwa bündig mit dem Distanzkorpus 15 bzw. dessen Stirnseite abschließen, während das gegenüberliegende Stützarmende über die gegenüberliegende Stirnseite des Distanzhalters 14 vorspringt. Die Länge des Stützarms 17 insgesamt kann dabei wiederum der zuvor genannten Teilung zwischen benachbarten Wälzkörpern entsprechen.

Wie Fig. 3 weiterhin zeigt, kann ein Distanzhalter 14 auch geteilt ausgebildet sein und aus zwei Distanzhalterhälften 14a und 14b zusammengesetzt sein. Eine Teilungsebene kann hierbei parallel zur Ebene der Trennfuge 7 zwischen den Laufbahnen 4 und 5 ausgerichtet sein.

Die beiden Hälften des Distanzhalters 14 können dabei miteinander formschlüssig verbunden und/oder verriegelt werden, beispielsweise mittels einer ineinandergreifenden Zapfenverbindung oder einer anderen Konturverriegelung 18.

Wie Fig. 4 zeigt, kann eine solche geteilte Ausbildung der Distanzhalter 14 auch symmetrisch ausgebildete und angeordnete Stützarme 13 aufweisen, die ähnlich wie bei der Ausführung nach Fig. 2 stirnseitig etwa gleich weit über den Distanzkorpus 15 vorspringen. Genauer gesagt ist die Ausbildung der Stützarme 17 zentriert, da die Endabschnitte der Stützarme 17 in der vorgenannten Weise zueinander komplementär oder verschieden, jedoch passgenau zueinander sein können.

Wie Fig. 5 zeigt, kann ein Distanzhalter 14 auch in einer Ebene senkrecht zur Laufrichtung der Wälzkörper 6 geteilt ausgebildet sein. In diesem Fall liegen die Distanzhalterhälften sozusagen Rücken an Rücken, wobei jede Distanzhalterhälfte eine Aufnahmeausnehmung 16 für einen Wälzkörper 6 aufweist. Bei der zuvor beschriebenen Ausführung nach den Figuren 3 und 4, deren Teilungsebene parallel zur Trennfuge 7 liegt, umfasst jede Distanzhalterhälfte zwei halbe Aufnahmeausnehmungen 16.

Wie die Figuren 6 und 7 zeigen, können die Distanzhalter 14 auch eine käfigartige Distanzhalterstruktur 19 umfassen, die mit zusätzlichen Distanzhalterstücken 20 kombiniert werden kann. Insbesondere kann ein etwa halbschalenförmiger Halbkäfig 19 vorgesehen sein, der mehrere oder alle Wälzkörper 6 auf einer Umfangsseite umgreift und zwischen benachbarte Wälzkörper 6 vorspringende Distanzabschnitte 19a aufweist, die durch Stützarmabschnitte 19b miteinander verbunden sind, wobei die genannten Stützarmabschnitte 19b die Wälzkörper 6 seitlich umgreifen.

Die genannten Stützarmabschnitte 19b laufen dabei in der zuvor genannten Längsausnehmung 12 der Laufbahn 5, die in dessen Mittenabschnitt 10 vorgesehen sein kann. Die genannte käfigähnliche Distanzstruktur 19 bildet sozusagen einen Halbkäfig, dessen seitlicher Randabschnitt in der genannten Längsausnehmung 12 läuft.

Um die Wälzkörper 6 auch auf der gegenüberliegenden Seite, die von der käfigähnlichen Distanzstruktur 19 nicht abgestützt wird, abzustützen, können die zusätzlichen Distanzstücke 20 Verwendung finden, die ähnlich den geteilten Distanzhaltern der Ausführung nach Fig. 5 in einer Ebene senkrecht zur Laufrichtung geteilt sein können.

Die genannten Distanzhalterstücke 20 können hierbei jeweils stirnseitig eine Aufnahmeausnehmung 16 aufweisen, die sich an einen jeweiligen Wälzkörper 6 schmiegt.

Wie die Figuren 6 und 7 zeigen, können die Distanzhalterstücke 20 an Lagerabschnitten 19c an der halbkäfigartigen Distanzstruktur 19 gelagert bzw. befestigt sein. Die genannten Lagerabschnitte 19c können beispielsweise an der käfigartigen Distanzstruktur 19 integral einstückig angeformt und/oder daran starr befestigt sein und/oder beispielsweise eine Aufnahmekontur in Form eines Vorsprungs bilden, an der die Distanzstücke 20 formschlüssig fixierbar sind.

## Patentansprüche

1. Wälzlager mit einer Vielzahl von Wälzkörpern (6), die zwischen zumindest zwei Laufbahnen (4, 5) aufgenommen sind, auf denen die Wälzkörper (6) abwälzen, wobei zwischen den Wälzkörpern (6) Distanzhalter (14) vorgesehen sind, die die Wälzkörper (6) voneinander beabstandet halten und die Trennfuge (7) zwischen den Laufbahnen (4, 5) aussparen, wobei zumindest eine der Laufbahnen (4, 5) in einem Mittenabschnitt (9, 10) eine etwa nutförmige Längsausnehmung (11, 12) aufweist, in der zwischen den Distanzhaltern (14) vorgesehene Stützarme (17) laufen, die jeweils den Wälzkörper (6) zwischen zwei benachbarten Distanzhaltern (14) umgreifen und die benachbarten Distanzhalter (14) gegeneinander in Laufrichtung der Wälzkörper (6) abstützen, **dadurch gekennzeichnet, dass** die Distanzhalter (14) separat voneinander ausgebildet sind, sodass zwischen jedem Paar benachbarter Wälzkörper (6) ein separater Distanzhalter (14) vorgesehen ist, wobei die Stützarme der separaten Distanzhalter jeweils eine Länge aufweisen, die zumindest etwa der gewünschten Beabstandung der Drehachsen benachbarter Wälzkörper (6) entspricht und die Stützarme benachbarter Distanzhalter aneinander stoßen, wobei die Stützarme jeweils gegenüberliegende Endabschnitte aufweisen, die zueinander komplementär und passgenau aneinandersetzbar konturiert sind.

2. Wälzlager nach dem vorhergehenden Anspruch, wobei jede der beiden Laufbahnen (4, 5) etwa mittig eine nutförmige Längsausnehmung (11, 12) aufweist und Stützarme (17) einen jeweiligen Wälzkörper (6) zwischen benachbarten Distanzhaltern (14) auf gegenüberliegenden Seiten umgreifen und benachbarte Distanzhalter (14) in Laufrichtung des Wälzkörpers (6) gegeneinander abstützen.

3. Wälzlager nach einem der vorhergehenden Ansprüche, wobei die Stützarme (17) sich parallel zur Laufrichtung der Wälzkörper (6) erstreckende Führungsleisten bilden, die umfangsseitig an den Distanzhaltern (14) vorspringen.

4. Wälzlager nach einem der vorhergehenden Ansprüche, wobei die Stützarme (17) zu einer Mittelebene der Distanzhalter (14), die sich senkrecht zur Laufrichtung der Wälzkörper (6) durch die Mitte der Distanzhalter (14) erstreckt, zentriert und/oder symmetrisch angeordnet sind und über gegenüberliegende Stirnseiten des jeweiligen Distanzhalterkorpus etwa gleich weit vorspringen.

5. Wälzlager nach einem der Ansprüche 1-3, wobei die Stützarme (17) bezüglich einer Mittelebene der Distanzhalter (14), die sich senkrecht zur Laufrichtung der Wälzkörper (6) durch die Mitte der Distanzhalter (14) erstreckt, exzentrisch versetzt angeordnet sind, insbesondere derart, dass ein Stützarmende etwa bündig mit einer Stirnseite des jeweiligen Distanzhalterkorpus abschließt und das gegenüberliegende Stützarmende über die gegenüberliegende Stirnseite des Distanzhalterkorpus vorspringt.

6. Wälzlager nach einem der vorhergehenden Ansprüche, wobei die Distanzhalter (14) geteilt ausgebildet sind und zwischen zwei benachbarten Wälzkörpern (6) mehrere Distanzhalterteile, insbesondere zwei Distanzhalterhälften umfassen, wobei eine Teilungsebene zwischen den Distanzhalterteilen etwa parallel zu einer Trennfuge (7) zwischen den Laufbahnen (4, 5) angeordnet ist.

7. Wälzlager nach einem der vorhergehenden Ansprüche, wobei die Distanzhalter (14) geteilt ausgebildet sind und zwischen zwei benachbarten Wälzkörpern (6) mehrere Distanzhalterteile, insbesondere zwei Distanzhalterhälften umfassen, wobei eine Teilungsebene zwischen den Distanzhalterteilen etwa senkrecht zur Laufrichtung der Wälzkörper angeordnet ist.

8. Wälzlager nach einem der beiden vorhergehenden Ansprüche, wobei die mehreren Distanzhalterteile eines Distanzhalters formschlüssig aneinander fixiert sind.

9. Wälzlager nach einem der vorhergehenden Ansprüche, wobei die Stützarme integral einstückig an den Distanzhaltern angeformt sind und/oder starr mit den Distanzhaltern (14) verbunden sind.

10. Wälzlager nach einem der vorhergehenden Ansprüche, wobei zusätzlich zu den separaten Distanzhaltern (14) eine halbkäfigartige Distanzhalterstruktur (19) vorgesehen ist, die zwischen mehrere benachbarte Wälzkörperpaare angeordnete Distanzabschnitte (19a) aufweist, die durch Stützarmabschnitte (19b) miteinander verbunden sind, wobei die genannten Stützarmabschnitte (19b) in der Längsausnehmung (12) einer Laufbahn (4, 5) laufen und jeweils einen Wälzkörper (6) umgreifen.

11. Wälzlager nach dem vorhergehenden Anspruch, wobei die käfigartige Distanzstruktur (19) etwa plattenförmig ausgebildet ist und etwa parallel zur Hauptkraftabtragsrichtung der Wälzkörper (6) ausgerichtet ist.

12. Wälzlager nach einem der beiden vorhergehenden Ansprüche, wobei zusätzlich zu der käfigartigen Distanzhalterstruktur (19) zwischen den Wälzkörpern (6) Distanzhalterstücke (20) vorgesehen sind, die sich zusätzlich zu den Distanzabschnitten (19a) zwischen jeweils zwei benachbarten Wälzkörpern (6) erstrecken, wobei die zusätzlichen Distanzhalterstücke (20) an der käfigartigen Distanzstruktur (19), insbesondere an deren Stützarmabschnitten (19b), abgestützt und/oder befestigt sind, wobei die zusätzlichen Distanzhalterstücke (20) jeweils geteilt ausgebildet sind und mehrere Teile zwischen jeweils zwei benachbarten Wälzkörpern (6) umfassen, die durch eine Trennebene etwa senkrecht zur Laufrichtung der Wälzkörper (6) getrennt sind.

13. Wälzlager nach einem der vorhergehenden Ansprüche, wobei die Stützarme (17) eine Dicke quer zur Laufrichtung der Wälzkörper (6) besitzen, die größer ist als eine lichte Weite einer Trennfuge (7) zwischen den Laufbahnkörpern an den Rändern der Laufbahnen (4, 5).

14. Wälzlager nach einem der vorhergehenden Ansprüche, wobei die Wälzkörper (6) kugelförmig ausgebildet sind und die Laufbahnen (4, 5) sich halbschalenförmig an die kugelförmigen Wälzkörper (6) schmiegen.

15. Wälzlager nach einem der Ansprüche 1-14, wobei das Wälzlager (1) als Vierpunktlager ausgebildet ist und vier vorzugsweise etwa viertelschalenförmige Laufbahnabschnitte aufweist, in denen die Wälzkörper (6) laufen, wobei die nutförmige Längsausnehmung (11, 12) und die darin aufgenommenen Distanzhalter (14) in einem Laufbahnkörper zwischen zwei daran ausgebildeten Laufbahnabschnitten vorgesehen sind.

## Claims

1. Rolling bearing having a plurality of rolling elements (6) that are received between at least two raceways (4, 5) on which the rolling elements (6) roll off, wherein spacers (14) that space the rolling elements (6) apart from one another and that leave open the joint (7) between the racetracks (4, 5), are provided between the rolling elements (6), wherein at least one of the raceways (4, 5) has an approximately groove-like longitudinal cutout (11, 12) in a center section (9, 10) in which longitudinal cutout (11, 12) support arms (17) run that are provided between the spacers (14), that each engage around the rolling element (6) between two adjacent spacers (14) and that support the adjacent spacers (14) against one another in the direction of running of the rolling elements (6), **characterized in that** the spacers (14) are formed separately so that a separate spacer (14) is provided between each pair of adjacent rolling elements (6), wherein the support arms of the separate spacers each have a length that at least approximately corresponds to the desired spacing of the axes of rotation of adjacent rolling elements (6), and the support arms of adjacent spacers but against one another, wherein the support arms each have opposite end sections which are complementary to one another and contoured in a manner that they can be put together in a form-fit manner.

2. Rolling bearing in accordance with the preceding claim, wherein each of the two raceways (4, 5) has a groove-like longitudinal cutout (11, 12) approximately centrally; and wherein supports arms (17) engage around a respective rolling element (6) between adjacent spacers (14) on oppositely disposed sides and support adjacent spacers (14) against one another in the direction of running of the rolling element (6).

3. Rolling bearing in accordance with one of the preceding claims, wherein the support arms (17) form guide rails that extend in parallel with the direction of running of the rolling elements (6) and that project at the spacers (14) at the peripheral side.

4. Rolling bearing in accordance with one of the preceding claims, wherein the support arms (17) are arranged centered and/or symmetrical with respect to a center plane of the spacers (14) that extends perpendicular to the direction of running of the rolling elements (6) through the center of the spacers (14) and project approximately equally far over oppositely disposed end faces of the respective spacer body.

5. Rolling bearing in accordance with one of the claims 1 - 3, wherein the support arms (17) are arranged eccentrically offset with respect to a center plane of the spacers (14) that extends perpendicular to the direction of running of the rolling elements (6) through the center of the spacers (14), in particular such that a support arm end terminates approximately flush with an end face of the respective spacer body and the oppositely disposed support arm end projects over the oppositely disposed end face of the spacer body.

6. Rolling bearing in accordance with one of the preceding claims, wherein the spacers (14) are configured as split and comprise a plurality of spacer parts, in particular two spacer halves, between two adjacent rolling elements (6); and wherein a splitting plane is arranged between the spacer parts approximately in parallel with a joint (7) between the raceways (4, 5).

7. Rolling bearing in accordance with one of the preceding claims, wherein the spacers (14) are configured as split and comprise a plurality of spacer parts, in particular two spacer halves, between two adjacent rolling elements (6), wherein a splitting plane is arranged between the spacer parts approximately perpendicular to the direction of running of the rolling elements.

8. Rolling bearing in accordance with one of the two preceding claims, wherein the plurality of spacer parts of a spacer are fixed to one another with shape matching.

9. Rolling bearing in accordance with one of the preceding claims, wherein the support arms are molded integrally in one piece to the spacers and/or are rigidly connected to the spacers (14).

10. Rolling bearing in accordance with one of the preceding claims, wherein the spacers (14) comprise a half cage-like spacer structure (19) that has spacer sections (19a) that are arranged between a plurality of adjacent rolling element pairs and that are connected to one another by support arm sections (19b), with said support arm sections (19b) running in the longitudinal cutout (12) of a raceway (4, 5) and each engaging around a rolling element (6).

11. Rolling bearing in accordance with the preceding claim, wherein the cage-like spacer structure (19) is approximately plate-like and is aligned approximately in parallel with the main force removal direction of the rolling elements (6).

12. Rolling bearing in accordance with one of the two preceding claims, wherein, in addition to the two cage-like spacer structure (19), spacer pieces (20) are provided between the rolling elements (6) that extend, in addition to the spacer sections (19a), between two respective adjacent rolling elements (6), wherein the additional spacer pieces (20) are supported at and/or fastened to the cage-like spacer structure (19), in particular at its support arm sections (19b), wherein the additional spacer pieces (20) are each formed as split and comprise a plurality of parts between two respective adjacent rolling elements (6) that are separated by a separation plane approximately perpendicular to the direction of running of the rolling elements (6).

13. Rolling bearing in accordance with one of the preceding claims, wherein the support arms (17) have a thickness transversely to the direction of running of the rolling elements (6) that is greater than a clearance of a joint (7) between the raceway elements at the margins of the raceways (4, 5).

14. Rolling bearing in accordance with one of the preceding claims, wherein the rolling elements (6) are spherical and the raceways (4, 5) in the manner of half-shells nestle up to the spherical rolling elements (6).

15. Rolling bearing in accordance with one of the claims 1 - 14, wherein the rolling bearing (1) is configured as a four point contact bearing and has four raceway sections, preferably of quarter shell shape, in which the rolling elements (6) run; and wherein the groove-like longitudinal cutout (11, 12) and the spacers (14) received therein are provided in a raceway body between two raceway sections formed thereat.

## Revendications

1. Palier à roulement avec une pluralité de corps de roulement (6), qui sont logés entre au moins deux voies de roulement (4, 5), sur lesquelles les corps de roulement (6) roulent, dans lequel sont prévus entre les corps de roulement (6) des écarteurs (14) qui maintiennent à distance les uns des autres les corps de roulement (6) et ménagent le joint de séparation (7) entre les voies de roulement (4, 5), dans lequel au moins une des voies de roulement (4, 5) présente dans une section centrale (9, 10) un creux longitudinal (11, 12) à peu près en forme de rainure, dans lequel circulent des bras d'appui (17) prévus entre les écarteurs (14), qui entourent respectivement le corps de roulement (6) entre deux écarteurs (14) adjacents et soutiennent les écarteurs (14) adjacents les uns à l'encontre des autres dans la direction de circulation des corps de roulement (6), **caractérisé en ce que** les écarteurs (14) sont réalisés séparément les uns des autres si bien qu'est prévu entre chaque paire de corps de roulement (6) adjacents un écarteur (14) séparé, dans lequel les bras d'appui des écarteurs séparés présentent respectivement une longueur, qui correspond au moins à peu près à l'espacement souhaité des axes de rotation de corps de roulement (6) adjacents et les bras d'appui d'écarteurs adjacents butent les uns contre les autres, dans lequel les bras d'appui présentent des sections d'extrémité se faisant face respectivement, qui sont contourées de manière complémentaire les unes par rapport aux autres et de manière à pouvoir être placées les unes sur les autres selon un ajustement précis.

2. Palier à roulement selon la revendication précédente, dans lequel chacune des deux voies de roulement (4, 5) présente à peu près au centre un creux longitudinal (11, 12) en forme de rainure et des bras d'appui (17) entourent un corps de roulement (6) respectif entre des écarteurs (14) adjacents sur des côtés se faisant face et soutiennent des écarteurs (14) adjacents dans le sens de circulation du corps de roulement (6) les uns à l'encontre des autres.

3. Palier à roulement selon l'une quelconque des revendications précédentes, dans lequel les bras d'appui (17) forment des baguettes de guidage s'étendant de manière parallèle par rapport au sens de circulation des corps de roulement (6), qui font saillie côté périphérique sur les écarteurs (14).

4. Palier à roulement selon l'une quelconque des revendications précédentes, dans lequel les bras d'appui (17) sont disposés de manière centrée et/ou symétrique par rapport à un plan central des écarteurs (14) qui s'étend de manière perpendiculaire par rapport à la direction de circulation des corps de roulement (6) à travers le centre des écarteurs (14) et font saillie à peu près aussi loin au-delà de côtés frontaux se faisant face du corps d'écarteur respectif.

5. Palier à roulement selon l'une quelconque des revendications 1 - 3, dans lequel les bras d'appui (17) sont disposés avec un décalage excentrique par rapport à un plan central des écarteurs (14) qui s'étend de manière perpendiculaire par rapport à la direction de circulation des corps de roulement (6) à travers le centre des écarteurs (14), en particulier de telle manière qu'une extrémité de bras d'appui se termine à peu près en affleurement avec un côté frontal du corps d'écarteur respectif et l'extrémité de bras d'appui faisant face fait saillie au-delà du corps frontal faisant face du corps d'écarteur.

6. Palier à roulement selon l'une quelconque des revendications précédentes, dans lequel les écarteurs (14) sont réalisés de manière divisée et comprennent entre deux corps de roulement (6) adjacents plusieurs parties d'écarteur, en particulier deux moitiés d'écarteur, dans lequel un plan de division entre les parties d'écarteur est disposé à peu près de manière parallèle par rapport à un joint de séparation (7) entre les voies de roulement (4, 5).

7. Palier à roulement selon l'une quelconque des revendications précédentes, dans lequel les écarteurs (14) sont réalisés de manière divisée et comprennent entre deux corps de roulement (6) adjacents plusieurs parties d'écarteur, en particulier deux moitiés d'écarteur, dans lequel un plan de division est disposé entre les parties d'écarteur à peu près de manière perpendiculaire par rapport à la direction de circulation des corps de roulement.

8. Palier à roulement selon l'une quelconque des deux revendications précédentes, dans lequel les plusieurs parties d'écarteur d'un écarteur sont fixées les unes sur les autres par complémentarité de forme.

9. Palier à roulement selon l'une quelconque des revendications précédentes, dans lequel les bras d'appui sont formés intégralement d'un seul tenant sur les écarteurs et/ou sont reliés de manière rigide aux écarteurs (14).

10. Palier à roulement selon l'une quelconque des revendications précédentes, dans lequel en plus des écarteurs (14) séparés, une structure d'écarteur (19) de type demi-cage est prévue, qui présente des sections d'écartement (19a) disposées entre plusieurs paires de corps de roulement, qui sont reliées les unes aux autres par des sections de bras d'appui (19b), dans lequel lesdites sections de bras d'appui (19b) circulent dans le creux longitudinal (12) d'une voie de roulement (4, 5) et entourent respectivement un corps de roulement (6).

11. Palier à roulement selon la revendication précédente, dans lequel la structure d'écartement (19) de type cage est réalisée à peu près en forme de panneau et est orientée à peu près de manière parallèle par rapport à la direction d'élimination de force principale des corps de roulement (6).

12. Palier à roulement selon l'une quelconque des deux revendications précédentes, dans lequel en plus de la structure d'écarteur (19) de type cage sont prévues entre les corps de roulement (6) des pièces d'écarteur (20), qui s'étendent en plus des sections d'écartement (19a) entre respectivement deux corps de roulement (6) adjacents, dans lequel les pièces d'écarteur (20) supplémentaires sont soutenues et/ou fixées sur la structure d'écartement (19) de type cage, en particulier sur ses sections de bras d'appui (19b), dans lequel les pièces d'écarteur (20) supplémentaires sont réalisées de manière respectivement divisée et comprennent plusieurs parties entre respectivement deux corps de roulement (6) adjacents, qui sont séparées par un plan de séparation de manière à peu près perpendiculaire par rapport à la direction de circulation des corps de roulement (6).

13. Palier à roulement selon l'une quelconque des revendications précédentes, dans lequel les bras d'appui (17) possèdent une épaisseur de manière transversale par rapport à la direction de circulation des corps de roulement (6), qui est plus grande qu'une petite largeur d'un joint de séparation (7) entre les corps de voie de roulement sur les bords des voies de roulement (4, 5).

14. Palier à roulement selon l'une quelconque des revendications précédentes, dans lequel les corps de roulement (6) sont réalisés en forme de sphère et les voies de roulement (4, 5) épousent en forme de demi-coque les corps de roulement (6) en forme de sphère.

15. Palier à roulement selon l'une quelconque des revendications 1 - 14, dans lequel le palier à roulement (1) est réalisé en tant que palier à quatre points et présente quatre sections de voie de roulement en forme de préférence à peu près de quart de coque, dans lesquelles les corps de roulement (6) circulent, dans lequel le creux longitudinal (11, 12) en forme de rainure et les écarteurs (14) logés dans celui-ci sont prévus dans un corps de voie de roulement entre deux sections de voie de roulement réalisées sur celui-ci.
